# EUROPÄISCHE PATENTANMELDUNG

(11) **EP 4 656 615 A1**
(43) Veröffentlichungstag der Anmeldung: **03.12.2025**
(21) Anmeldenummer: 25151098.8
(22) Anmeldetag: 10.01.2025
(51) Int. Cl.: C04B 28/18, E04F 15/02, E04F 15/08, C04B 111/60

(54) **BODENFLIESE**

(30) Priorität: 28.05.2024 DE 202024102762 U
(71) Anmelder: KKVV GmbH, 46242 Bottrop (DE)
(72) Erfinder: Koczwara, Andreas, 46242 Bottrop (DE)
(74) Vertreter: Kluin Patent

(57) **Zusammenfassung**

Es wird eine Bodenfliese (1) aufweisend einen flächigen Grundkörper (2) vorgeschlagen, wobei der Grundkörper (2) an wenigstens zwei gegenüberliegenden Rändern eine verriegelbare Nut-Feder-Verbindung (3, 4) aufweist welche einstückig mit dem Grundkörper verbunden ist, wobei der Grundkörper (1) gebrannt ist. Ferner wird ein Verfahren zum Herstellen einer Bodenfliese (1) vorgeschlagen.

## Beschreibung

Die Erfindung betrifft eine Bodenfliese.

Bodenfliesen gehören zu den beliebten und robusten Bodenbelägen. Insbesondere in Eingangsbereichen, Küchen oder Bädern werden häufig eher Bodenfliesen verlegt als beispielsweise Parkett oder Laminat. Zum einen ist die Beliebtheit von Bodenfliesen in den genannten Bereichen durch ihre strukturellen Eigenschaften bedingt. So sind Bodenfliesen robust und leicht zu reinigen. Zum anderen hat sich der Verbraucher daran gewöhnt, in Räumen, in denen die Wahrscheinlichkeit hoch ist, dass Wasser und Schmutz auf den Boden gelangt, Bodenfliesen verlegt sind.

Neben diesen Gründen für die Beliebtheit von Bodenfliesen ist es auch insbesondere die Haptik, welche andere Bodenbeläge als weniger geeignet erscheinen lässt, in manchen Räumen verlegt zu werden. Der Verbraucher erwartet vom Boden im Eingangsbereich das Gefühl von Bodenfliesen. Er soll stabil wirken und den Eindruck von festem Stein vermitteln.

Zudem spielt bei der Auswahl des Bodenbelages oft auch die Frage nach der Gebäudeinfrastruktur eine Rolle. Ist beispielsweise eine Fußbodenheizung vorgesehen, so zeigen Bodenfliesen durch ihre vergleichsweise hohe Wärmeleitfähigkeit deutliche Vorteile gegenüber Parkett- oder Laminatböden.

Neben all diesen Vorteilen besitzt ein gefliester Boden jedoch auch Nachteile. Im Vergleich zum Verlegen eines Parkett-, Laminat- oder Vinylbodens müssen klassische Bodenfliesen aufwendig verlegt werden. Das Verlegen ist mit viel Schmutz verbunden, zeitaufwendig und teuer. Zumeist überlässt der Verbraucher das Verlegen von Bodenfliesen einem Handwerkerbetrieb, während moderne Parkett-, Laminat- oder Vinylböden auch vom Nicht-Fachmann leicht verlegt werden können. Zudem dürfen Böden aus klassischen Bodenfliesen nach dem Verlegen und Verfugen eine Zeit lang nicht betreten werden. Falls klassische Bodenfliesen wieder entnommen werden müssen, ist dies mit großem Aufwand, viel Arbeit und Schmutz verbunden, was ebenfalls nicht wünschenswert ist.

Es ist daher eine Aufgabe der vorliegenden Erfindung, eine Bodenfliese bereitzustellen, welche die Nachteile des Standes der Technik nicht aufweist, sondern geeignet ist, auch von fachfremden Personen leicht und ohne besondere Vorkenntnisse verlegt werden und nach dem Verlegen direkt betreten werden können.

Diese Aufgabe wird gelöst durch die Gegenstände der Ansprüche 1 und 13.

Die erfindungsgemäße Bodenfliese weist einen flächigen Grundkörper auf. Der Grundkörper der Bodenfliese ist gebrannt. Hierdurch erhält die Bodenfliese diese hervorragende Haptik. Um das Verlegen der Bodenfliese zu einem Fliesenboden deutlich zu erleichtern, ist an wenigstens zwei gegenüberliegenden Rändern Grundkörpers eine verriegelbare Nut-Feder-Verbindung vorgesehen. Hierdurch ist es auf vorteilhafte Weise möglich, einen Verbund von erfindungsgemäßen Bodenfliesen durch Verriegeln der Nut-Feder-Verbindungen stabil und einfach zu einem Fliesenboden zu verlegen, ohne dass die Bodenfliesen verklebt und verfugt werden müssten. Die verriegelte Nut-Feder-Verbindung hält die Bodenfliesen fest zusammen. Das Legen und Verriegeln kann sauber und ohne weitere Hilfsmittel auch von fachfremden Personen durchgeführt werden. Die Verriegelbarkeit der Nut-Feder-Verbindung ermöglicht es auf vorteilhafte Weise, dass die Nut-Feder-Verbindung nicht geklebt werden muss. Zum Zusammenhalten mehrerer Bodenfliesen können diese einfach miteinander verriegelt werden. Sollen die Bodenfliesen wieder entnommen werden, so wird die Verriegelung gelöst.

Brennen im Sinne der vorliegenden Erfindung ist ein durch Wärmeeintrag induziertes Verkitten einzelner Bestandteile des Grundkörpers und unterscheidet sich daher insbesondere vom Heiß-Extrudieren, wodurch sich auch die strukturellen und haptischen Eigenschaften von gebrannten und heiß-extrudierten Materialien deutlich unterscheiden.

Vorteilhafte Ausgestaltungen und Weiterbildungen der Erfindung sind den Unteransprüchen, sowie der Beschreibung unter Bezugnahme auf die Zeichnungen entnehmbar.

Gemäß einer bevorzugten Ausführungsform der vorliegenden Erfindung ist vorgesehen, dass der Grundkörper bei wenigstens 100 °C gebrannt ist. Hierdurch wird ein besonders stabiles Zusammenhalten der Bestandteile des Grundkörpers erreicht. Besonders vorteilhaft ist ein Brennen des Grundkörpers bei Temperaturen zwischen 120 °C und 500 °C und insbesondere zwischen 150 °C und 220 °C. Dies entspricht einem guten Kompromiss aus erzielter Festigkeit und aufgewendeter Energie.

Besonders bevorzugt ist eine Ausführungsform der vorliegenden Erfindung, bei der vorgesehen ist, dass die Nut-Feder-Verbindung zum Verriegeln formschlüssig ineinander verhakbar ist. Insbesondere ist vorgesehen, dass die Nut-Feder-Verbindung eine Klick-Verbindung ist. Hierdurch wird es noch einfacher, die Bodenfliesen zu einem Fliesenboden zu verlegen, wodurch die Installation eines Fliesenbodens auch Ungeübten zugänglich wird.

Gemäß einer weiteren bevorzugten Ausführungsform der vorliegenden Erfindung ist vorgesehen, dass der Grundkörper mineralische Bestandteile aufweist, wobei der Anteil der mineralischen Bestandteile am Grundkörper wenigstens 50 Gewichtsprozent und vorzugsweise wenigstens 75 Gewichtsprozent, insbesondere mehr als 90 Gewichtsprozent beträgt. Hierdurch wird auf vorteilhafte Weise sichergestellt, dass der Grundkörper beim Brennen eine Festigkeit erhält, welche von einer Bodenfliese erwartet wird. Ferner ergibt sich durch die Verwendung von wenigstens 50 %, bevorzugt wenigstens 75 % und insbesondere wenigstens 90 % mineralische Bestandteile die typische Fliesen-Haptik. Denkbar ist, dass die mineralischen Bestandteile Quarz umfassen, vorzugsweise, dass wenigstens die Hälfte, bevorzugt wenigstens zwei Drittel und besonders bevorzugt wenigstens drei Viertel der mineralischen Bestandteile Quarz sind. Insbesondere ist vorgesehen, dass die mineralischen Bestandteile Calciumaluminiumsilikat umfassen.

Besonders bevorzugt ist ferner vorgesehen, dass der Grundkörper mit einem Anteil Faserstoff gebrannt ist. Der Faserstoff umfasst vorzugsweise organische Fasern und insbesondere Cellulose. Der Faserstoff trägt deutlich zur mechanischen Eignung der Bodenfliese als Bodenbelag und insbesondere zum Verlegen mit Hilfe der verriegelbaren Nut-Feder-Verbindung bei.

Hierzu ist vorzugsweise vorgesehen, dass die Bodenfliese mit zwischen 2 Gewichtsprozent und 20 Gewichtsprozent, bevorzugt mit zwischen 5 Gewichtsprozent und 18 Gewichtsprozent und besonders bevorzugt mit zwischen 6 Gewichtsprozent und 15 Gewichtsprozent Faserstoff gebrannt ist. Die genannten Bereiche sind vorteilhafterweise so gewählt, dass der Faserstoff die Festigkeit nicht beeinträchtigt und die Mechanik des Grundkörpers so einstellt, dass eine optimale Verwendbarkeit der Nut-Feder-Verbindung bereitgestellt ist.

Außerordentlich vorteilhaft ist eine bevorzugte Ausführungsform der vorliegenden Erfindung, bei der vorgesehen ist, dass der Grundkörper keinen Kunststoff, insbesondere kein PVC oder andere Polymere aufweist. Hierdurch ist es sichergestellt, dass von der Bodenfliese keinerlei gesundheitliche Gefahren ausgehen. Insbesondere müssen hierdurch keine Weichmacher in der Bodenfliese vorgesehen werden.

Gemäß einer weiteren bevorzugten Ausführungsform der vorliegenden Erfindung ist vorgesehen, dass der Grundkörper mit einem Anteil Quarz gebrannt ist. Der Quarz des gebrannten Grundkörpers ist hierbei beispielsweise verkittet. Als optimaler Anteil haben sich zwischen 10 Gewichtsprozent und 90 Gewichtsprozent Quarz, bevorzugt zwischen 35 Gewichtsprozent und 85 Gewichtsprozent Quarz, besonders bevorzugt zwischen 50 Gewichtsprozent und 80 Gewichtsprozent Quarz und insbesondere zwischen 64 Gewichtsprozent und 72 Gewichtsprozent Quarz erwiesen. Der Quarz gibt der Bodenfliese als mineralischer Bestandteil ihre typischen Flieseneigenschaften.

Gemäß einer weiteren bevorzugten Ausführungsform der vorliegenden Erfindung ist vorgesehen, dass der Grundkörper mit zwischen 2 Gewichtsprozent und 40 Gewichtsprozent Calciumaluminiumsilikat gebrannt ist. Bevorzugt ist der Grundkörper mit zwischen 10 Gewichtsprozent und 30 Gewichtsprozent Calciumaluminiumsilikat gebrannt. Besonders bevorzugt ist der Grundkörper mit zwischen 20 Gewichtsprozent und 26 Gewichtsprozent Calciumaluminiumsilikat gebrannt. Das Calciumaluminiumsilikat trägt ebenfalls beim Brennen des Grundkörpers zur Ausbildung eines festen Grundkörpers bei, wobei sich die beschriebenen Anteile als besonders vorteilhaft erwiesen haben.

Besonders bevorzugt ist vorgesehen, dass der Grundkörper Tobermorit aufweist und insbesondere ein Tobermorit ist. Der Tobermorit wird vorzugsweise beim Brennen des Grundkörpers gebildet, was zur Nutzbarkeit der Bodenfliese und insbesondere dem Einbringen einer funktionstüchtigen und Haltbaren Nut-Feder-Verbindung beiträgt.

Gemäß einer weiteren bevorzugten Ausführungsform der vorliegenden Erfindung ist vorgesehen, dass der Grundkörper an seinen Rändern angefast ist. Denkbar ist auch, dass der Grundkörper an seinen Rändern gepresst ist, dass beispielsweise am Rand des Grundkörpers eine Fase eingepresst ist. Denkbar ist, dass die Fase an den Rändern des Grundkörpers eingefärbt, beispielsweise lackiert ist. Hierdurch ergibt sich die Möglichkeit, mehrere Bodenfliesen direkt aneinander anliegend anzuordnen, ohne dass ein Zwischenraum zwischen den Grundkörpern entsteht. Dies erhöht auf vorteilhafte Weise die strukturelle Wirkung des verlegten Verbandes von Bodenfliesen und vereinfacht das Handling, da kein Zwischenraum nachträglich verfüllt werden muss.

Denkbar ist eine Ausführungsform der vorliegenden Erfindung bei der vorgesehen ist, dass auf dem Grundkörper eine Dekorschicht angeordnet ist. Durch die Gestaltung der Dekorschicht kann beispielsweise für eine einheitliche Farbgebung der Bodenfliesen gesorgt werden. Denkbar ist, dass auf der Dekorschicht eine Nutzschicht angeordnet ist und/oder dass die Dekorschicht die Nutzschicht umfasst. Denkbar ist auch, dass die Nutzschicht direkt auf dem Grundkörper angeordnet, ist wobei die Bodenfliese keine Dekorschicht umfasst. Die Nutzschicht schützt die Dekorschicht und den Grundkörper und bietet die Möglichkeit, die Oberfläche der Bodenfliese an die Bedürfnisse des Benutzers, beispielsweise bezüglich optischer Gestaltung, Rutschfestigkeit, Abriebklasse, etc. bereitzustellen. Denkbar ist, dass die Dekorschicht aufgedruckt ist. Denkbar ist aber auch, dass die Dekorschicht eine Papierschicht umfasst. Denkbar ist, dass die Dekorschicht ein Laminat ist und/oder auf den Grundkörper auflaminiert ist. Vorstellbar ist ferner, dass die Nutzschicht auflackiert, aufgedruckt, auflaminiert und/oder aufgeklebt ist. Besonders bevorzugt ist ferner vorgesehen, dass die Dekorschicht und/oder die Nutzschicht Melamin aufweisen, wobei der Anteil an Melamin an der Bodenfliese vorzugsweise zwischen 0,5 Gewichtsprozent und 5 Gewichtsprozent, besonders bevorzugt zwischen 0,5 Gewichtsprozent und 2 Gewichtsprozent und insbesondere zwischen 1,0 Gewichtsprozent und 1,7 Gewichtsprozent beträgt. Durch das Melamin werden Nutz- bzw. Dekorschicht auf vorteilhafte Weise imprägniert und werden somit widerstandsfähiger.

Denkbar ist, dass die Bodenfliese einen Gegenzug aufweist. Der Gegenzug ist besonders bevorzugt auf der Seite des Grundkörpers angeordnet, welche der Dekorschicht bzw. Nutzschicht gegenüberliegt. Hierdurch kann eine ungewollte Verformung der Bodenfliese unterbunden werden. Hierzu ist vorzugsweise vorgesehen, dass der Gegenzug Melamin umfasst.

Besonders bevorzugt ist eine Ausführungsform bei der vorgesehen ist, dass der Grundkörper bedruckt ist. Besonders bevorzugt ist vorgesehen, dass der Grundkörper mittels Digitaldruck bedruckt ist. Hierzu ist vorzugsweise vorgesehen, dass der bedruckte Grundkörper lackiert ist. Diese Ausführungsform ist besonders vorteilhaft, da sie sehr robust und haltbar ist. Insbesondere wird durch den Druck bewirkt, dass kein Gegenzug benötigt wird. Folglich ist vorzugsweise vorgesehen, dass an dem bedruckten Grundkörper kein Gegenzug angeordnet ist.

Vorstellbar ist, dass das Herstellen des Grundkörpers Brennen und anschließendes Schneiden umfasst. Insbesondere ist hierzu vorgesehen, dass das Bedrucken und vorzugsweise das Lackieren des Grundkörpers nach dem Schneiden durchgeführt wird. Wird statt des Bedruckens eine Dekorschicht aus Papier aufgebracht, so ist vorzugsweise vorgesehen, dass die Dekorschicht aus Papier vor dem Schneiden aufgebracht wird.

Ein weiterer Gegenstand zur Lösung der eingangs genannten Aufgabe ist ein Verfahren zum Herstellen einer Bodenfliese. Die Bodenfliese ist vorzugsweise eine erfindungsgemäße Bodenfliese. Hierbei wird ein flächiger Grundkörper gebrannt und anschließend eine verriegelbare Nut-Feder-Verbindung in den Grundkörper eingefräst.

Sämtliche Einzelheiten, Vorteile und Merkmale, welche im Zusammenhang mit der erfindungsgemäßen Bodenfliese offenbart sind, beziehen sich ebenfalls auf das erfindungsgemäße Verfahren zum Erstellen einer Bodenfliese.

Weitere Einzelheiten, Merkmale und Vorteile der Erfindung ergeben sich aus den Zeichnungen sowie aus der nachfolgenden Beschreibung von bevorzugten Ausführungsformen anhand der Zeichnungen. Die Zeichnungen illustrieren dabei lediglich beispielhafte Ausführungsform der Erfindung, welche den Erfindungsgedanken nicht einschränken.

Es zeigen:
- Fig. 1:: eine schematische Ansicht einer Bodenfliese gemäß einer beispielhaften Ausführungsform der vorliegenden Erfindung,
- Fig. 2:: eine schnittbildliche, schematische Ansicht zweier Bodenfliesen gemäß beispielhaften Ausführungsformen der vorliegenden Erfindung,
- Fig. 3:: eine schnittbildliche, schematische Ansicht zweier Bodenfliesen gemäß beispielhaften Ausführungsformen der vorliegenden Erfindung mit verriegelter Nut-Feder-Verbindung

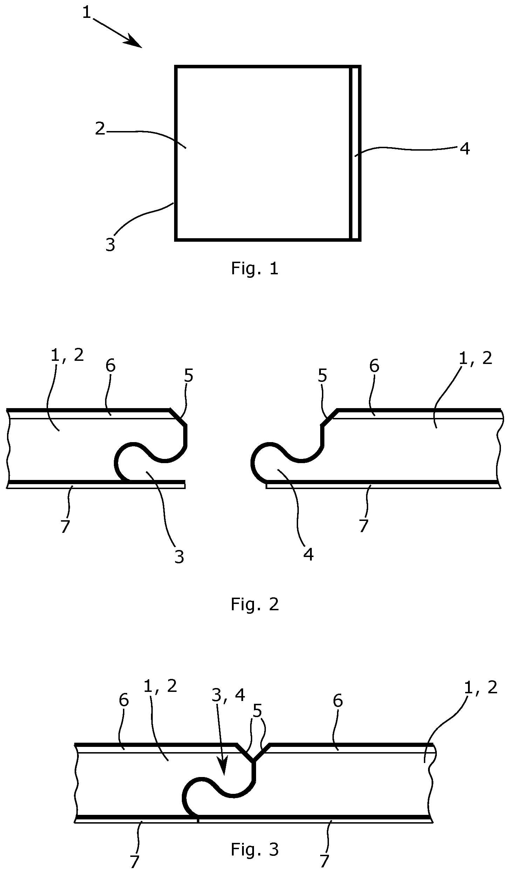

Die Figur 1 zeigt eine schematische Ansicht einer Bodenfliese 1 gemäß einer beispielhaften Ausführungsform der vorliegenden Erfindung. Die Bodenfliese 1 weist einen Grundkörper 2 auf. Der Grundkörper 2 kann, wie hier dargestellt, quadratisch ausgebildet sein. Denkbar ist aber auch, dass der Grundkörper 2 eine andere Form, wie insbesondere rechteckig, aufweisen kann.

An zwei gegenüberliegenden Seiten des Grundkörpers 2 ist eine Nut-Feder-Verbindung 3, 4 angebracht. Die Nut-Feder-Verbindung 3, 4 ist ebenfalls in den schnittbildlichen Ansichten der Figuren 2 und 3 zu erkennen. Sie weist eine Nut 3 und eine Feder 4 auf. Die Nut 3 ist in der Figur 1 verdeckt und daher nicht zu sehen. Zum Verbinden von zwei Bodenfliesen 1 wird die Feder 4 einer Bodenfliese 1 in die Nut 3 einer weiteren Bodenfliese 1 eingeführt und in dieser formschlüssig verriegelt. Figur 3 zeigt zwei so verbundene Bodenfliesen 1. Die verriegelbare Nut-Feder-Verbindung bildet eine Klick-Verbindung. Hierdurch ist es besonders einfach, die Bodenfliesen 1 zu einem Fliesenboden zu verlegen.

Die Ränder des Grundkörpers 2 sind mit hier einer Fase 5 versehen. Verlegt man mehrere Bodenfliesen 1 im Verbund, so ergeben sich abgesenkte Bereiche an den Stößen der Bodenfliesen 2, welche die Struktur der Bodenfliesen 1 im Verbund verdeutlicht. Die gezeigten Bodenfliesen 1 sind als pressed bevel-Bodenbeläge hergestellt, die Fasen 5 sind also in die Ränder gepresst. Alternativ hierzu können die Bodenfliesen 1 auch nicht angefast oder an den Rändern gepresst sein, so dass sie im Verbund seitlich praktisch vollflächig aneinander anliegen.

Auf der Oberfläche des Grundkörpers 2 ist eine Dekorschicht 6 angeordnet. Die Dekorschicht 6 umfasst eine (nicht separat eingezeichnete) Nutzschicht und kann so neben rein optischen Effekten auch die Nutzbarkeit der Bodenfliese 1 erhöhen. So können über eine entsprechende Nutzschicht die Rutschfestigkeit oder die Abriebklasse eingestellt werden. Die Dekorschicht 6 kann aufgedruckt, aufgeklebt oder auflaminiert sein. Die Nutzschicht kann ebenfalls aufgedruckt, aufgeklebt oder auflaminiert sein. In der hier gezeigten besonders bevorzugten Ausführungsformen ist die Dekorschicht 6 ein Digitaldruck, auf welchen eine Lackschicht aufgetragen ist.

Auf der Oberfläche des Grundkörpers 2, welcher der Dekorschicht 6 gegenüberliegt, ist ein Gegenzug 7 angeordnet. Dieser verhindert, dass sich die Bodenfliese 1 wölbt und in einer gleichmäßig flachen Form verbleibt. Nutz- und Dekorschicht und Gegenzug weisen Melamin auf.

Die strukturellen Eigenschaften der Bodenfliese 1, insbesondere die Festigkeit der Bodenfliese 1 und die Haptik der Bodenfliese 1 werden durch eine bestimmte Materialkomposition hervorgerufen. Das Material der Bodenfliese besteht zu 65 Gewichtsprozent bis 71 Gewichtsprozent aus Quarz, welcher bei wenigstens 100 °C gebrannt sind.

Neben einem Anteil von 7 bis 14 Gewichtsprozent Cellulose und dem Quarz wird der Grundkörper 2 der Bodenfliese 1 mit einem Anteil von 21 bis 25 Gewichtsprozent Calciumaluminiumsilikat gebrannt. Im Grundkörper 2 bildet sich beim Brennen bei Temperaturen zwischen 150 °C und 220 °C ein Tobermorit aus. Das hierdurch entstandene Material eignet sich in hervorragender Weise dazu, die Nut-Feder-Verbindung 3, 4 in den Grundkörper 2 einzufräsen. Der Materialmix und die Herstellungsmethode führen zu exakt dem Maß an Festigkeit, welches für das Verlegen der Bodenfliese 1 unter Verwendung der Nut-Feder-Verbindung 3, 4 als Klick-Verbindung und Gewährleistung einer hervorragenden Haltbarkeit der verlegten Bodenfliese 1 im alltäglichen Gebrauch benötigt wird.

### Bezugszeichenliste:

- 1: Bodenfliese
- 2: Grundkörper
- 3: Nut
- 4: Feder
- 5: Fase
- 6: Dekorschicht
- 7: Gegenzug

## Patentansprüche

1. Bodenfliese (1) aufweisend einen flächigen Grundkörper (2), wobei der Grundkörper (2) an wenigstens zwei gegenüberliegenden Rändern eine verriegelbare Nut-Feder-Verbindung (3, 4) aufweist welche einstückig mit dem Grundkörper verbunden ist, wobei der Grundkörper (1) gebrannt ist.

2. Bodenfliese (1) nach Anspruch 1, **dadurch gekennzeichnet, dass** der Grundkörper (1) bei wenigstens 100 °C gebrannt ist.

3. Bodenfliese (1) nach einem der vorhergehenden Ansprüche, **dadurch gekennzeichnet, dass** die Nut-Feder-Verbindung (3, 4) zum Verriegeln formschlüssig ineinander verhakbar ist, wobei die Nut-Feder-Verbindung (3, 4) insbesondere eine Klick-Verbindung ist.

4. Bodenfliese (1) nach einem der vorhergehenden Ansprüche, **dadurch gekennzeichnet, dass** der Grundkörper (2) mineralische Bestandteile aufweist, wobei der Anteil der mineralischen Bestandteile am Grundkörper (2) wenigstens 50 Gewichtsprozent und vorzugsweise wenigstens 75 Gewichtsprozent beträgt und besonders bevorzugt mehr als 90 % beträgt.

5. Bodenfliese (1) nach einem der vorhergehenden Ansprüche, **dadurch gekennzeichnet, dass** der Grundkörper (2) mit einem Anteil Faserstoff gebrannt ist, wobei der Faserstoff vorzugsweise organische Fasern und insbesondere Cellulose aufweist.

6. Bodenfliese (1) nach Anspruch 5, **dadurch gekennzeichnet, dass** die Bodenfliese (1) mit zwischen 2 Gewichtsprozent und 20 Gewichtsprozent, bevorzugt mit zwischen 5 Gewichtsprozent und 18 Gewichtsprozent, besonders bevorzugt mit zwischen 6 Gewichtsprozent und 15 Gewichtsprozent Faserstoff und insbesondere mit zwischen 6 und 10 Gewichtsprozent Faserstoff gebrannt ist.

7. Bodenfliese (1) nach einem der vorhergehenden Ansprüche, **dadurch gekennzeichnet, dass** der Grundkörper (2) keinen Kunststoff, insbesondere kein PVC und/oder andere Polymere aufweist.

8. Bodenfliese (1) nach einem der vorhergehenden Ansprüche, **dadurch gekennzeichnet, dass** der Grundkörper (2) mit zwischen 10 Gewichtsprozent und 90 Gewichtsprozent Quarz gebrannt ist, wobei der Grundkörper (2) bevorzugt mit zwischen 35 Gewichtsprozent und 85 Gewichtsprozent Quarz gebrannt ist, wobei der Grundkörper (2) besonders bevorzugt mit zwischen 50 Gewichtsprozent und 80 Gewichtsprozent Quarz gebrannt ist, wobei der Grundkörper (2) insbesondere mit zwischen 64 Gewichtsprozent und 72 Gewichtsprozent Quarzsand gebrannt ist.

9. Bodenfliese (1) nach einem der vorhergehenden Ansprüche, **dadurch gekennzeichnet, dass** der Grundkörper mit zwischen 2 Gewichtsprozent und 40 Gewichtsprozent Calciumaluminiumsilikat gebrannt ist, wobei der Grundkörper bevorzugt mit zwischen 10 Gewichtsprozent und 30 Gewichtsprozent Calciumaluminiumsilikat gebrannt ist, wobei der Grundkörper besonders bevorzugt mit zwischen 20 Gewichtsprozent und 26 Gewichtsprozent Calciumaluminiumsilikat gebrannt ist.

10. Bodenfliese (1) nach einem der vorhergehenden Ansprüche, **dadurch gekennzeichnet, dass** der Grundkörper (2) Tobermorit aufweist und insbesondere ein Tobermorit ist.

11. Bodenfliese (1) nach einem der vorhergehenden Ansprüche, **dadurch gekennzeichnet, dass** der Grundkörper (2) an seinen Rändern angefast und/oder gepresst ist.

12. Bodenfliese (1) nach einem der vorhergehenden Ansprüche, **dadurch gekennzeichnet, dass** auf dem Grundkörper (2) eine Dekorschicht (6) angeordnet ist, wobei die Dekorschicht (6) bevorzugt gedruckt ist, wobei auf der Dekorschicht (6) besonders bevorzugt eine Lackschicht angeordnet ist.

13. Verfahren zum Herstellen einer Bodenfliese (1), vorzugsweise einer Bodenfliese nach einem der vorhergehenden Ansprüche, wobei ein flächiger Grundkörper (2) gebrannt wird, wobei anschließend eine verriegelbare Nut-Feder-Verbindung (3. 4) in den Grundkörper (2) eingefräst wird.
